(19) Europäisches Patentamt
European Patent Office
Office européen des brevets

(11) Veröffentlichungsnummer: **0 256 470 B1**

# (12) EUROPÄISCHE PATENTSCHRIFT

(45) Veröffentlichungstag der Patentschrift: **14.08.91**

(51) Int. Cl.[5]: **C08G 18/32**, C09K 19/38

(21) Anmeldenummer: **87111533.3**

(22) Anmeldetag: **10.08.87**

## (54) Lineare Polyurethan-Elastomere und Verfahren zu ihrer Herstellung.

(30) Priorität: **19.08.86 DE 3628141**

(43) Veröffentlichungstag der Anmeldung:
**24.02.88 Patentblatt 88/08**

(45) Bekanntmachung des Hinweises auf die Patenterteilung:
**14.08.91 Patentblatt 91/33**

(84) Benannte Vertragsstaaten:
**DE ES FR GB IT**

(56) Entgegenhaltungen:
**EP-A- 0 140 133**
**EP-A- 0 172 517**

**KOBUNSHI RONBUNSHU, Band 43, Nr. 5, Mai 1986, Seiten 311-314, Tokyo, JP; M. TANAKA et al.: "Liquid crystalline polyurethane containing biphenyl units"**

(73) Patentinhaber: **BAYER AG**

**W-5090 Leverkusen 1 Bayerwerk(DE)**

(72) Erfinder: **Süling, Carlhans, Dr.**
**Carl-Leverkus-Strasse 10**
**W-5068 Odenthal(DE)**
Erfinder: **Kausch, Michael, Dr.**
**Semmelweisstrasse 151**
**W-5000 Koeln 80(DE)**
Erfinder: **Dauscher, Rudi, Dr.**
**Pommernallee 39**
**W-4047 Dormagen(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft im wesentlichen lineare Polyurethan-Elastomere mit verbesserten Eigenschaften aus Polyester- oder Polyetherdiolen, Diisocyanaten und Kettenverlängerern, wobei letztere flüssig-kristalline Eigenschaften aufweisen; sowie Folien und insbesondere Fasern, die auf Basis solcher flüssig-kristalliner Polyurethan-Komponenten hergestellt werden und thermoplastisch (über Schmelzen) oder aus Lösungen (nach Lösungsspinnprozessen) verformt werden. Die Erfindung betrifft ferner ein entsprechendes Verfahren zur Herstellung der Polyurethan-Elastomeren, insbesondere von PU-Elastomerfasern (Elasthan- bzw. Spandex-Fasern).

Es ist seit langem bekannt, Polyurethane als Basis für die Herstellung elastischer Materialien heranzuziehen. Derartige Polyurethan-Elastomere werden hergestellt durch Polyaddition von langkettigen Diolen mit Diisocyanaten sowie niedermolekularen Dihydroxy- oder Diaminverbindungen ("Kettenverlängerer"). Elastomere, die Diaminoverbindungen als Kettenverlängerer enthalten, sind entsprechend als Polyharnstoffpolyurethane zu bezeichnen. Die Polyurethane werden so aufgebaut, daß das Makromolekül eine Segmentstruktur aufweist, d.h. aus kristallinen und amorphen Blöcken (Hartsegmente bzw. Weichsegmente) besteht. Die Hartsegmente wirken dann aufgrund ihrer Kristallinität als Fixpunkte des Netzwerkes, während die Weichsegmente, deren Glastemperatur unterhalb der Gebrauchstemperatur liegen muß, für die Elastizität des Elastomeren verantwortlich sind.

Um beispielsweise Elastomerfasern aus diesen Polyurethanen bzw. Polyharnstoffpolyurethanen herzustellen, werden diese meist aus ihren Lösungen versponnen. Ein Verspinnen nach dem besonders wirtschaftlichen, umweltfreundlichen und mit hohen Abzugsgeschwindigkeiten durchzuführenden Schmelzspinnverfahren konnte sich bis jetzt technisch nicht durchsetzen. Elastomere mit harnstoffgruppenhaltigen Hartsegmenten lassen sich nicht unzersetzt aufschmelzen und sind deshalb dem Schmelzspinnverfahren nicht zugänglich. Thermoplastische Polyurethan-Elastomere, deren Hartsegmente Urethangruppen enthalten, besitzen hingegen für die textile Verarbeitung zu geringe thermische Beständigkeit bzw. Festigkeit. Obwohl die thermische Beständigkeit von Polyharnstoffpolyurethanelastomeren höher liegt, ist auch hier eine Verbesserung sehr wünschenswert, vor allem wenn an einen Einsatz für technische Zwecke gedacht wird. Diese Aufgabe läßt sich erfindungsgemäß durch Polyurethane bzw. Polyharnstoffpolyurethane lösen, die erhalten werden durch Polyaddition von Diisocyanaten mit Makrodiolen eines mittleren Molekulargewichtes von 800 bis 4000 und im wesentlichen linearen Kettenverlängerungsmitteln, dadurch gekennzeichnet, daß die Kettenverlängerungsmittel flüssig-kristalline Eigenschaften aufweisen.

Als höhermolekulare im wesentlichen Lineare Dihydroxylverbindungen (auch Makrodiole genannt) zum Aufbau der erfindungsgemäßen Polyurethane bzw. Polyharnstoffpolyurethane können die zur Herstellung von Elastomeren bzw. Elastomerfasern bekannten Dihydroxylverbindungen verwendet werden, wie sie z.B. in der DE-A 2 832 352 oder in der US-A 3 719 708 aufgeführt werden. Beispielsweise seien genannt: Polyesterdiole, Polyetherdiole, Polyacetaldiole, Polycarbonatdiole und andere Dihydroxyverbindungen mit Schmelzpunkten unter 60 °C, vorzugsweise unter 45 °C, wie sie entsprechend dem Stand der Technik für lineare Polyurethan-Elastomere oder Polyesterfasern verwendet werden. Bevorzugt sind Polyesterdiole und Polyetherdiole oder ihre Mischungen. Als Polyesterdiole sind z.B. Dicarbonsäurepolyester geeignet, die sowohl mehrere Alkohole wie auch mehrere Carbonsäuren enthalten können. Besonders geeignet sind Mischpolyester aus Adipinsäure und 2 bis 4 verschiedenen, vorzugsweise längerkettigen ($\geqq C_4$)-Diolen. Besonders geeignete Diole stellen Hexandiol-1,6, Butandiol-1,4 und Neopentylglykol dar. Auch Lactonpolyester oder Mischpolyester auf Basis $\epsilon$-Caprolacton, Methyl-$\epsilon$-Caprolacton bzw. Methylvalerolacton sind geeignet.

Als Polyetherdiole eignen sich besonders Polytetramethyllenoxiddiole, vorzugsweise mit Molekulargewichten von 1.000 bis 3.000.

Es können auch Gemische verschiedener Makrodiole verwendet werden.

Als Diisocyanate können die üblichen aromatischen und aliphatischen Diisocyanate verwendet werden. Als aliphatische Diisocyanate seien beispielsweise genannt: Hexamethylendiisocyanat, Isophorondiisocyanat, Dicyclohexylmethandiisocyanat sowie trans-1,4-Cyclo-hexandiisocyanat. Besonders brauchbare Ergebnisse lassen sich mit 2,4-Toluylendiisocyanat und seinen entsprechenden Isomerengemischen sowie insbesondere mit 4,4'-Diphenylmethandiisocyanatbzw. seinen entsprechenden Isomerengemischen erzielen.

Selbstverständlich ist es auch möglich, Mischungen von aromatischen und aliphatischen Diisocyanaten zu verwenden.

Es können aber auch Diisocyanate mit flüssig-kristallinen Eigenschaften eingesetzt werden, z.B. Polyisocyanate der allgemeinen Formel

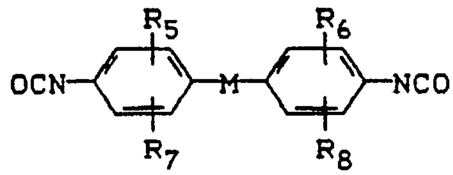

wobei

M $-HC=CH-$, $-N=N-$, $-CH=N-$, $-\overset{\overset{O}{\|}}{C}O-$;

weniger bevorzugt auch die trans-Amid-Gruppierung oder eine Bindung

und

$R_5$, $R_6$, $R_7$, $R_8$ unabhängig voneinander H, Alkyl (vorzugsweise gegebenenfalls geradkettiges oder verzweigtes $C_1$-$C_4$-Alkyl, insbesondere Methyl) und/oder F, Cl, Br, J oder CN und $CF_3$ bedeutet, insbesondere jedoch eine symmetrische Substitution an beiden Kernen, z.B. 3,3'-Dimethyl, vorliegt.

Beispiele sind flüssig-kristalline Eigenschaften aufweisende Diisocyanate wie

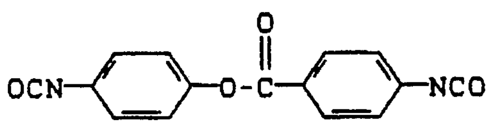

(besonders bevorzugt)

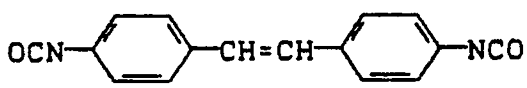

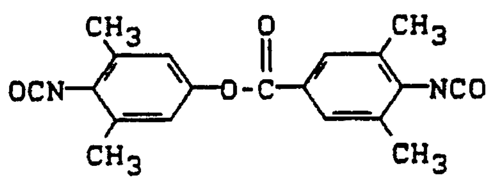

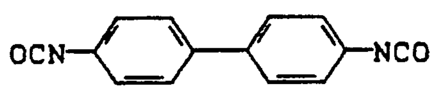

(weniger bevorzugt)

Die erfindungsgemäßen Kettenverlängerer sind dadurch gekennzeichnet, daß sie flüssig-kristalline Eigenschaften aufweisen, und dadurch in der Lage sind in den Polyurethanen bzw. Polyharnstoffpolyurethanen mesogene Strukturen auszubilden. Wie z.B. in "Liquid Crystal Polymers I-II" in "Advances in Polymer Science 59-61", Springer Verlag (1984) beschrieben, müssen die mesogenen Gruppen aus mindestens zwei aromatischen oder cycloaliphatischen Ringen bestehen, die über die para-Stellung durch kurze, nichtflexible Bindungen verbunden sind. Hierdurch wird die lineare Anordnung der Ringe erhalten. Die mesogene Gruppe stellt ein Element dar, dessen Länge bedeutend größer ist, als der Durchmesser der aromatischen bzw. cycloaliphatischen Ringe. Mesogene Eigenschaften werden erhalten, wenn das Länge/Durchmesser-Verhältnis der Gruppen größer als 3:1 ist.

Als verbindende Gruppen zwischen den aromatischen oder cycloaliphatischen Ringen eignen sich z.B. die Imino-, Azo-, Azoxy-, Ester-, trans-Vinylene-, oder weniger geeignet trans-Amid-Gruppe.

Um bei der Bildung der erfindungsgemäßen Polyurethane bzw. Polyharnstoffpolyurethane als Kettenverlängerer wirksam zu sein, müssen die flüssigkristallinen Verbindungen endständige H-acide Gruppen tragen, welche gegenüber NCO-Gruppen reaktiv sind. Bevorzugte H-acide Gruppen stellen die aliphatische

OH- sowie die aromatische bzw. aliphatische $NH_2$-Gruppe dar.

Geeignet sind organische Kettenverlängerungsmittel mit LC-Verhalten, beispielsweise der Formel

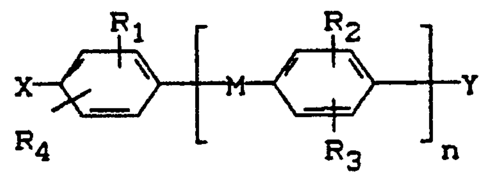

wobei

M 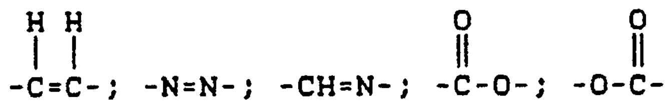

oder die trans-Amidgruppierung,

$R_1$ bis $R_4$ Wasserstoff, Halogen, (F, Cl, Br, J), CN, $CF_3$ oder gesättigte aliphatische, gegebenenfalls durch Ethersauerstoffatome unterbrochene Alkyl-Substituenten mit 1 bis 12 C-Atomen, vorzugsweise Methylgruppen, und

n = ganze Zahlen 1, 2 oder 3,

X und Y unabhängig voneinander eine gegenüber Isocyanaten reaktive Gruppe mit aktiven H-Atomen, z.B. OH-, primäre oder sekundäre Amino-, SH- oder -CO-NH-$NH_2$-Gruppen, besonders bevorzugt OH- und/oder $NH_2$-Gruppen, bei denen insbesondere die OH-Gruppen aliphatisch gebunden sind,

darstellen.

Beispiele für die X und Y-Gruppen sind -OH, $-(O-CH_2-CH_2-)_nOH$,

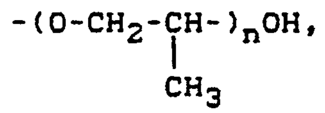

(n = 1 bis 20, bevorzugt 1) $NH_2$, $-(CH_2)_mNH_2$, (m = 1, 2, 3 oder 4, bevorzugt 1 oder 3), -CO-NH-$NH_2$, (einschließlich -NH-CO-NH-$NH_2$, - O-CO-NH-$NH_2$) oder SH-Gruppen.

Als geeignete LC-Ketenverlängerungs-Verbindungen seien beispielsweise genannt:

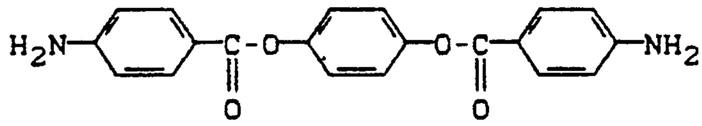

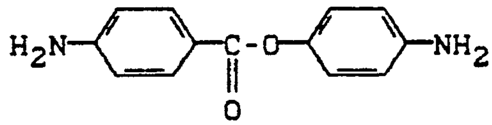

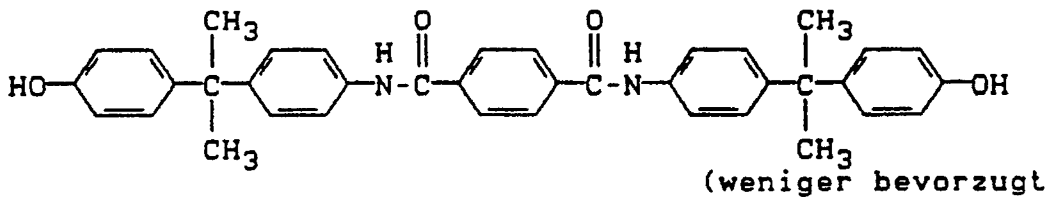

(weniger bevorzugt)

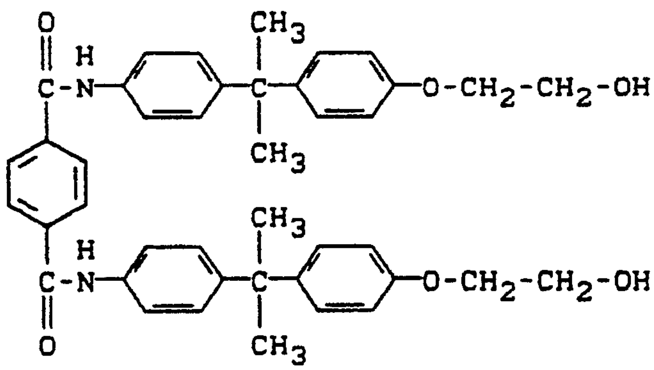

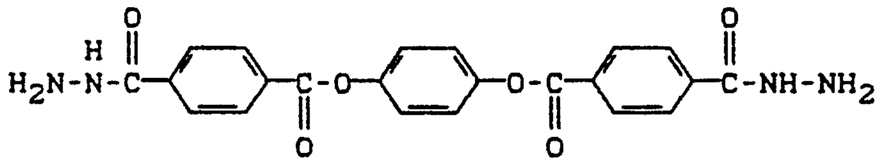

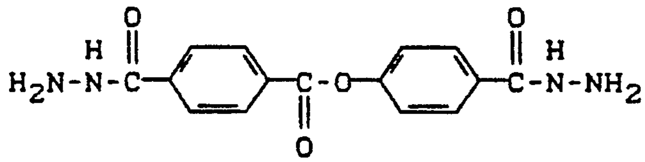

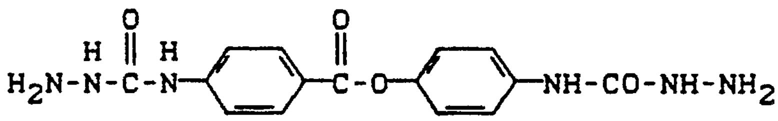

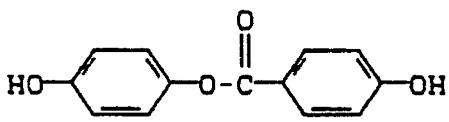

(weniger bevorzugt wegen der phenolischen OH-Gruppen)

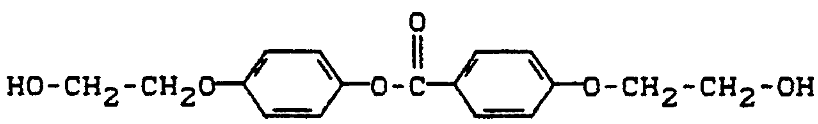

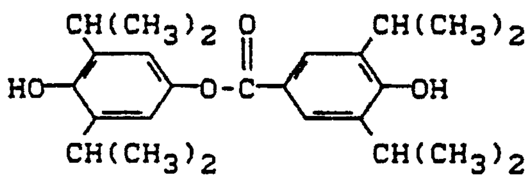

(weniger bevorzugt)

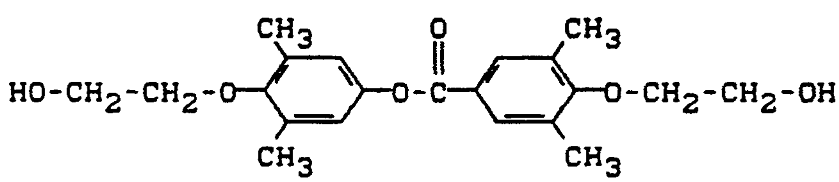

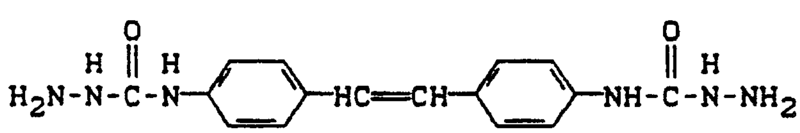

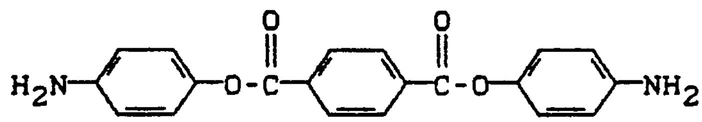

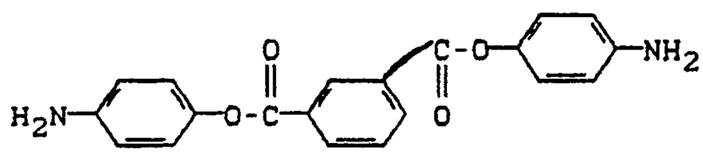

Die erfindungsgemäßen Kettenverlängerungsmittel können auch in Kombination mit anderen, in der Polyurethanchemie sonst üblichen Kettenverlängerern wie 1,4-Butandiol, Ethylenglykol, 1,4-bis($\beta$-Hydroxyethoxy)benzol, Ethylendiamin, Tetramethylendiamin, 1,3- und/oder 1,4-Cyclohexandiamin, Isophorondiamin, 4,4'-Diamino-dicyclohexylmethan, 3,3'-Dimethyl-4,4'-diamino-dicyclohexylmethan, $\alpha,\alpha,\alpha',\alpha'$-Tetramethyl-m/p-xylyendiamin, 4,4'-Diaminodiphenylmethan oder 3,3'-Dimethyl-4,4'-diaminodiphenylmethan, umgesetzt werden.

Die erfindungsgemäßen Polyurethane können nach einem Einstufenverfahren hergestellt werden. Hierbei werden das Makrodiol und der erfindungsgemäße Kettenverlängerer, der endständige, vorzugsweise nicht phenolische OH-Gruppen enthält, in Schmelze oder in einem geeigneten Lösungsmittel mit dem Diisocyanat umgesetzt. Als Lösungsmittel eignen sich z.B. Dimethylformamid, Dimethylacetamid, Dimethylsulfoxid oder N-Methylpyrrolidon. Den Schmelzen oder Lösungen können übliche Additive wie Wärme-/Licht-/Oxydationsstabilisatoren, Pigmente oder Farbstoffe sowie Füllstoffe o.ä. zugegeben werden.

Eine andere Herstellungysmöglichkeit stellt das Prepolymerverfahren dar. Hierbei wird zunächst das Makrodiol mit dem Diisocyanat endständig verkappt, so daß man ein Makrodiiszocyanat (NCO-Prepolymer) erhält. Auch diese Reaktion kann sowohl in Schmelze als auch in einem geeigneten Lösungsmittel erfolgen. In einem zweiten Schritt erfolgt dann die Umsetzung mit den erfindungsgemäßen Kettenverlängerern, wobei auch diese Reaktion wiederum sowohl in Schmelze als auch in einem geeigneten Lösungsmittel, z.B. Chlorbenzol, Toluol, Xylol oder auch DMF, DMA, duchgeführt werden kann. Das Prepolymerverfahren eignet sich besonders für Kettenverlängerer, die endständige Aminogruppen tragen. Gleichermaßen geeignet sind jedoch auch andere, in der Polyurethanchemie gebräuchliche Verfahrensvarianten. Insbesondere gehören hierzu auch kontinuierliche Polyadditionsverfahren (vgl. dazu US-A 3 377 308). Zur Herstellung und Verspinnung zu Elastomerfasern siehe H. OERTEL, Chemiefasern/Textilindustrie, 27/79. Jahrgang (1977) S. 1090 - 1096).

Aufgrund ihrer hohen Festigkeit, hohen Modulwerte bei Dehnung, ohne Nachteile von verminderter Querfestigkeit, guten thermischen Stabilitäten, verbesserter heat distortion-Werte, verbesserter Thermofixierbarkeit und Formstabilität von Fäden oder Geweben/Gewirken daraus, (vgl. H. OERTEL, Chemiefasern/Textilindustrie, 28/80. Jahrgang (1978), Seiten 42-99; s. a. dort Meßverfahren), sind die erfindungsgemäßen Polyurethane bzw. Polyharnstoffurethane hervorragend geeignet für die Herstellung elastomerer Formkörper, insbesondere von Elastomerfasern, in denen hohe Anforderungen gestellt werden.

Ganz besonders hervorragend eignen sich die erfindungsgemäßen Polyurethane bzw. Polyharnstoffpolyurethane zur Herstellung von Elastomerfasern hoher Qualität, wobei die Verspinnung sowohl nach dem Schmelz-, Trocken-, Naß-oder gegebenenfalls auch Reaktivspinnverfahren erfolgen kann. Für die Polyharnstoffpolyurethane ist hierbei das Trocken- oder Naßspinnverfahren bevorzugt, während die Polyurethane am günstigsten nach dem wirtschaftlichen Schmelzspinnverfahren verarbeitet werden. Derartige Elastomerfasern zeigen eine hohe Heißreißzeit, d.h. hohe Belastungsmöglichkeit bei hohen Temperaturen, bevor Abrisse erfolgen. Hierdurch ergibt sich auch eine gute Thermofixierbarkeit bzw. thermische Verformabarkeit (vgl. Buch: Synthesefasern, Herausgeber B. v. Falkai, Verlag Chemie, 1981, S. 184-190).

Patentbeispiele

Herstellung von flüssig-kristallinen (LC)-Kettenverlängerungsmitteln

Kettenverlängerer 1:

980 g (5,28 Mol) p-Nitrobenzoylchlorid wrden in 2 l Dimethylformamid gelöst und innerhalb von 30 Minuten in eine Lösung von 290,8 g (2,64 Mol) Hydrochinon und 535 g Triethylamin in 2 l Dimethylformamid unter Kühlung auf 35°C zugetropft. Während der Reaktion werden weitere 4 l Dimethylformamid portionsweise zugesetzt, um das voluminös ausfallende Reaktionsprodukt teilweise in Lösung zu halten. Nach Beendigung des Zutropfens laßt man 3 Stunden nachrühren und fällt dann das Produkt durch Eintragen in 10 1 Wasser aus. Nach Umkristallisieren aus Dioxan erhält man 867 g p-Phenylendiol-bis-(4-nitrobenzoat)[1].Ausbeute: 79,7 %. Schmelzpunkt 262°C; nematisch-isotrop 281°C.

200 g p-Phenylendiol-bis(4-nitobenzoat) werden in 2 l Dioxan gelöst und 5 Stunden lang bei 60 bis 70°C im Autoklaven bei 50 bar/$H_2$ hydriert (Katalysator: 40 g Raney-Ni). Das ausgefallene Hydrierungsprodukt wird in Dimethylformamid gelöst, vom Raney-Ni abfiltriert, und durch Eintragen in Wasser gefällt. Ausbeute nach dem Trocknen 106 g p-Phenylendiol-bis-(4-aminobenzoat)[2].Schmelzpunkt (fest → nematisch) 322°C, bei Abkühlung nematisch/fest: 275°C.

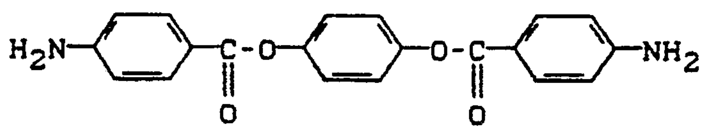

(Kettenverlängerer 1)

Kettenverlängerer 2:

Zu einer Lösung von 189 g (0,833 Mol) 4-[1-(4-amino-phenyl)-1-methylethyl]-phenol und 70,3 g Natriumhydrogencarbonat in 500 ml Dimethylacetamid werden innerhalb von 30 Minuten bei Raumtemperatur 85 g (0,419 Mol) Terephthalsäurechlorid zugetropft. Danach wird auf 50°C aufgeheizt. Innerhalb von 3 Stunden werden 19 1 $CO_2$ freigesetzt. Nach Reaktionsende wird die Lösung abgekühlt und das entstandene Bisphenol[3]) durch Eintragen der Reaktionsmischung in Wasser ausgefällt. Ausbeute nach dem Trocknen 280 g. Umkristallisieren aus Methylethylketon: Methanol 1,3:1 unter Zusatz von Aktivkohle. Schmelzpunkt 290°C.

1) J.P. Schroeder, D.W. Bristol, J. Org. Chem. 38, 3160 (1973)

2) D.C. Schroeder, J.P. Schroeder, J. Am. Chem. Soc. 96, 4348 (1974)

3) Y. Imai, S. Abe, T. Takahashi, J. Polym. Sci., Polym. chem. Ed., 20, 683 (1982).

Zu 584 g (1 Mol) des Bisphenols in 1.250 ml Dioxan wurden in einem Autoklaven bei 130°C und 3,5 bis 5 bar 131,8 g (3,0 Mol) Ethylenoxid innerhalb von 11 Minuten zudosiert. Als Katalysator dienten 1,5 g Triethylamin. Nach Beendigung des Zudosierens wurde nach 5 Stunden bei 130°C nachgerührt. Das Produkt wurde anschließend durch Eintragen in Wasser ausgefällt, getrocknet und aus 4 l Nitrobenzol umkristallisiert. Ausbeute 535 g, Fp 268°C.

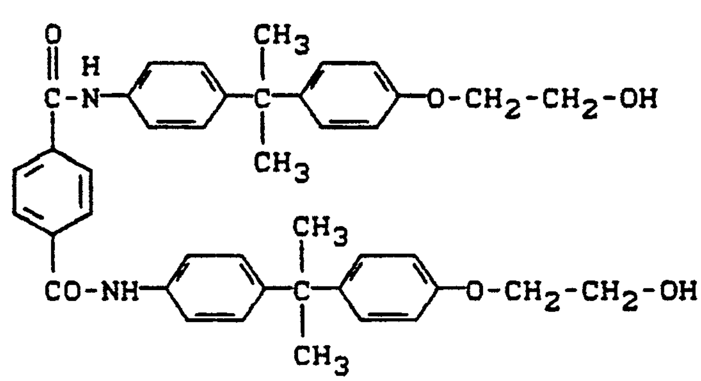

(Kettenverlängerer 2)

Kettenverlängerer 3: (nicht erfindungsgemäß)

2.500 g (13,44 Mol) 4,4'-Dihydroxybiphenyl wurden in 10 l Dioxan gelöst und in einem Autoklaven zusammen mit 300 ml Ethylenoxid und 12,5 g Triethylamin auf 130°C geheizt. Im Verlauf von 5 Stunden wurden weitere 1.200 ml Ethylenoxid zugegeben, so daß sich im Autoklaven ein Druck von 4,5 bar einstellte. Danach wurde weitere 8 Stunden bei 130°C gerührt. Nach dem Abkühlen erhielt man eine hellbraune Suspension, die scharf abgesaugt und mit Dioxan gewaschen wurde.
Rohausbeute 3.452 g (93,8 % der Theorie).

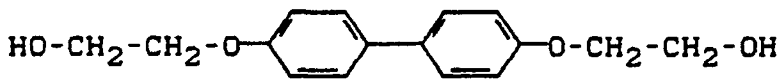

140 g des Rohproduktes wurden aus 4,2 l n-Butanol umkristallisiert. Man erhielt 128 g 4,4'-Dihydroxyethoxybiphenyl in Form perlmuttartig glänzender Plättchen.

Schmelzpunkt: 212°C (Übergang fest/nematisch)
217°C Übergang nematisch/isotrop.

Beispiel 1

160 g eines Copolyesterdiols aus Adipinsäure, Hexandiol-1,6 und Neopentylglykol (Molverhältnis der Diole 65:35) vom Molekulargewicht 2.000, 108,64 g Kettenverlängerer 2 und 63,84 g Diphenylmethan-4,4'-diisocyanat wurden zusammen mit 0,16 ml Dibutylzinnlaurat in 336 gy Dimethylacetamid auf 70°C erhitzt. Innerhalb von 2 Stunden wurden weitere 9 g Diphenylmethan-4,4'-diisocyanat portionsweise zudosiert. Die dann hochviskose Lösung wurde mit 840 g Dimethylacetamid auf einen Feststoffgehalt von 22 % eingestellt (Lösungsviskosität: 43,9 Pa.s/20°C). Die inerte Viskoität des Polymeren betrug 0,98 dl/g (5 g/l Dimethylacetamid bei 30°C).

Zu der viskosen Polymerlösung wurden, bezogen auf Feststoff, 0,3 % Mg-Stearat und 1 % des Silikonöles Baysilon® M100 (BAYER AG, Leverkusen) zugesetzt und die Lösung trockenversponnen (über eine 8-Loch-Düse mit Bohrungen von je 0,20 mm Durchmesser, Schachtheiztemperaturen von 200°C, Lufttemperatur 220°C, Abzugsgeschwindigkeit 165 m/min).

Fadeneigenschaften:

| | |
|---|---|
| Titer | 171 dtex. |
| Feinheitsfestigkeit | 0,93 cN/dtex. (DIN 53 815) |
| Höchstzugkraftdehnung | 314 % (DIN 53 815) |
| Modul 100 % | 0,205 cN/dtex. (bei erstmali- |
| Modul 300 % | 0,795 cN/dtex. ger Dehnung) |
| Schmelzpunkt | 215°C Erweichung, ab 230°C auf Kofler-Bank geschmolzen. |

Die Elastomerfäden zeigen eine höhere Festigkeit und sehr hohe Modulwerte bei Ausdehnung auf 100 bzw. 300 % Dehnung.

Vergleichsbeispiel 2

300 g (0,15 Mol) Polytetramethylenoxiddiols vom Molekulargewicht 2.000 und 77,6 g (0,283 Mol) 4,4'-Di(β-hydroxyethoxy-)biphenyl wurden zusammen mit 491,4 g Dimethylacetamid unter Stickstoff auf 80°C erwärmt. Dann wurden unter Rühren 113,8 g (0,455 Mol) 4,4'-Diphenylmethandiisocyanatzugegeben und 2 Stunden bei 70°C gehalten. Danach war eine sehr hochviskose Lösung entstanden in der durch Titration keine freien NCO-Gruppen mehr nachweisbar waren. Es wurde durch Zugabe von 1.415 g DMAC auf einen

Feststoffgehalt von 20 % verdünnt. Diese Lösung besaß eine Lösungsviskosität von 227,6 Pa.s bei 20° C und eine inhärente Viskosität von 1,28 dl/g (5 g/l Dimethylacetamid bei 30° C).

Zu der viskosen Polymerlösung wurden, bezogen auf Feststoff 4 % Titandioxid, 0,3 % Mg-Stearat und 1 % des Silikonöles Baysilon® M100 (BAYER-AG, D-5090 Leverkusen) zugesetzt und die Lösung trockenversponnen (vgl. Beispiel 1).

Verspinnungsbedingungen wie bei Beispiel 1, außer Lufttemperaur Schacht 210° C und Abzugsgeschwindigkeit 151 m/min.

**Fadeneigenschaften:**

| | |
|---|---|
| Titer | 185 dtex. |
| Feinheitsfestigkeit | 0,96 cN/dtex. (DIN 53 815) |
| Höchstzugkraftdehnung | 412 % (DIN 53 815) |
| Modul 300 % | 0,386 cN/dtex. |
| Restdehnung (nach 5-maliger Dehnung auf 300 % und 60 sec. nach Entlastung) | 56 % |
| Heißreißzeit bei 193,7°C (in Stickstoff) | 16,4 sec. |

(Bestimmung siehe DE-A 2 707 659)

Vergleichsbeispiel 3

300 g (0,3 Mol) Polytetramethylenoxiddiol vom Molekulargewicht 1.000 wurden zusammen mit 37,4 g (0,136 Mol) 4,4'-Di-(β-hydroxyethoxy)-biphenyl und 0,3 ml Dibutylzinnlaurat in 452,5 g Dimethylacetamid unter Stickstoff auf 70° C erwärmt. Danach wurden unter Rühren innerhalb von 10 Minuten 115,1 g (0,460 Mol) 4,4'-Diphenylmethandiisocyanat zugegeben und weitere 35 Minuten bei 60° C gerührt. Danach war eine sehr hoch viskose Lösung entstanden, in der sich durch Titration keine NCO-Gruppen mehr nachweisen ließen. Es wurde durch Zugabe von 1.152 g Dimethylacetamid auf einen Feststoffgehalt von 22 % verdünnt. Diese Lösung besaß eine Lösungsviskosität von 138 Pa.s bei 20° C und eine inhärente Viskosität von 1,22 dl/g (5 g/l Dimethylacetamid bei 30° C).

Zu der viskosen Polymerlösung wurden, bezogen auf Feststoff 4 % Titandioxid, 0,3 % Mg-Stearat und 1 % des Silikonöles Baysilon® M100 zugesetzt und die Lösung trockenversponnen (Spinnbedingungen wie bei Beispiel 2).

**Fadeneigenschaften:**

| | |
|---|---|
| Titer | 169 dtex. |
| Feinheitsfestigkeit | 1,21 cN/dtex. (DIN 53 815) |
| Höchstzugkraftdehnung | 421 % (DIN 53 815) |
| Modul 300 % | 0,276 cN/dtex. (bei erstmaliger Dehnung) |
| Restdehnung | 34 % (nach 3-maliger Ausdehnung auf 300 %, 60 sec. nach Entlastung) |

Vergleichsbeispiel 4

300 g (0,15 Mol) Polytetramethylenoxiddiol vom Molekulargewicht 2000, 89,6 g (0,283 Mol) 1,1'-Isopropyliden-bis-(p-phenylen-oxy)-di-β-ethanol (Diamol® 22 der Firma AKZO-Chemie)

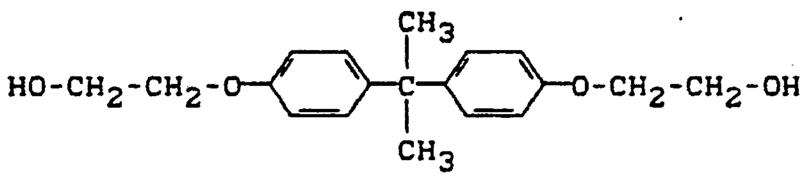

und 0,3 ml Dibutylzinnlaurat in 504,4 g Dimethylacetamid wurden unter Stickstoff auf 36° C erwärmt. Dann wurden unter Rühren 114,8 g (0,459 Mol) 4,4'-Diphenylmethandiisocyanat zugegeben und 15 min bei 55° C gehalten. Danach war eine sehr hochviskose Lösung entstanden, in der durch Titration keine freien NCO-Gruppen mehr nachweisbar waren. Es wurde durch Zugabe von 1515 g Dimethylacetamid auf einen Feststoffgehalt von 20 % verdünnt. Diese Lösung besaß eine Lösungsviskosität von 166.2 Pa.s bei 20° C und eine inhärente Viskosität von 1,31 dl/g (5 g/l Dimethylacetamid bei 30° C).

Zu der viskosen Polymerlösung wurden, bezogen auf Feststoff 4 % Titandioxid, 0,3 % Mg-Stearat und 1 % des Silikonöls Baysilon® M100 (Bayer AG, D-5090 Leverkusen) zugesetzt und die Lösung trocken versponnen.

Verspinnungsbedingungen wie bei Beispiel 1, außer Lufttemperatur 230° C und Abzugsgeschwindigkeit 150 m/min.

Fadeneigenschaften:

| | |
|---|---|
| Titer | 197 dtex |
| Feinheitsfestigkeit | 0,52 cN/dtex. (DIN 53 815) |
| Höchstzugkraftdehnung | 581 % (DIN 53 815) |
| Modul 300 % | 0,033 cN/dtex |
| Restdehnung | 40 % (nach 5-maliger Ausdehnung auf 300 %, 60 sec. nach Entlastung) |

Es werden insbesondere sehr niedrige Moduli erhalten.

**Patentansprüche**

1. Im wesentlichen lineare Polyurethan- und/oder Polyurethanharnstoff-Elastomere aus höhermolekularen Dihydroxyverbindungen, Diisocyanaten und Kettenverlängerungsmitteln, dadurch gekennzeichnet, daß die organischen Kettenverlängerungsmittel mit flüssig-kristallinen Verhalten solche der Formel

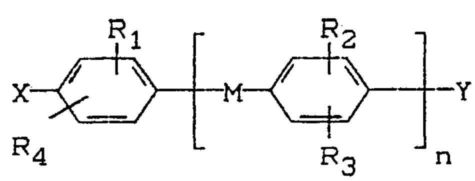

wobei

M 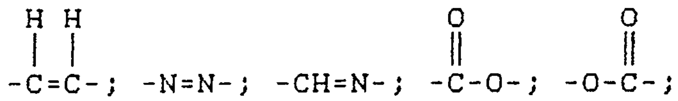

oder die trans-Amidgruppierung,

$R_1$ bis $R_4$ Wasserstoff, F, Cl, Br, J, CN, $CF_3$ oder gesättigte aliphatische, gegebenenfalls durch Ethersauerstoffatome unterbrochene Alkyl-Substituenten mit 1 bis 12 C-Atomen, und

n = ganze Zahlen 1, 2 oder 3,

X und Y unabhängig voneinander eine gegenüber Isocyanaten reaktive Gruppe mit aktiven H-Atomen

darstellen,

2. Elastomere in Folien- oder Faserform entsprechend Anspruch 1.

3. Elastomere nach Ansprüchen 1 und 2, dadurch gekennzeichnet, daß in den organischen Kettenverlängerungsmitteln mit flüssig-kristallinem Verhalten $R_1$ bis $R_4$ Wasserstoff, Cl, Br, CN oder Methylgruppen darstellen.

4. Elastomere nach Ansprüchen 1 bis 3, dadurch gekennzeichnet, daß X und Y unabhängig voneinander OH-, primäre und sekundäre Amino-, SH- oder -CO-NH-$NH_2$-Gruppen darstellen.

5. Elastomere nach Ansprüchen 1 bis 4, dadurch gekennzeichnet, daß X und Y unabhängig voneinander OH-und/oder $NH_2$-Gruppen darstellen, welche (cyclo)aliphatisch gebunden sind.

6. Verfahren zur Herstellung im wesenlichen linearer Polyurethan- und/oder Polyurethanharnstoff - Elastomerer auf Basis höhermolekularer Dihydroxyverbindungen, Diisocyanaten und Kettenverlängerungsmitteln, dadurch gekennzeichnet, daß als Kettenverlängerungsmittel mit flüssig-kristallinen Eigenschaften solche der Formel

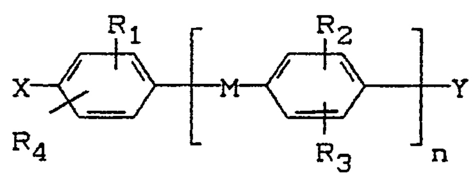

wobei

M 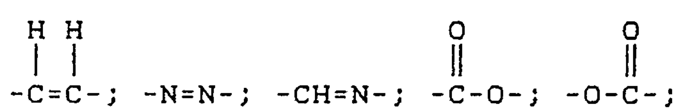

oder die trans-Amidgruppierung,

$R_1$ bis $R_4$ Wasserstoff, F, Cl, Br, J, CN, $CF_3$ oder gesättigte aliphatische, gegebenenfalls durch Ethersauerstoffatome unterbrochene Alkyl-Substituenten mit 1 bis 12 C-Atomen, und

n ganze Zahlen 1, 2 oder 3,

X und Y unabhängig voneinander eine gegenüber Isocyanaten reaktive Gruppe mit aktiven H-Atomen, bedeuten,

verwendet werden.

7. Verfahren nach Anspruch 6, dadurch gekennzeichnet, daß flüssigkristalline Kettenverlängerungsmittel, bei denen X und Y unabhängig voneinander eine OH-, primäre oder sekundäre Amino-, SH- oder -CO-NH-$NH_2$-Gruppe bedeuten, verwendet werden.

8. Verfahren nach Ansprüchen 6 und 7, dadurch gekennzeichnet, daß x und Y unabhängig voneinander OH-und/oder $NH_2$-Gruppen, die (cyclo)aliphatisch gebunden sind, bedeuten.

9. Verfahren nach Anspruch 6, 7 und 8, dadurch gekennzeichnet, daß die im wesentlichen linearen Polyurethan(harnstoff)e aus der Schmelze oder aus Lösungen zu Folien und Elastomerfasern verformt werden.

## Claims

1. Substantially linear polyurethane and/or polyurethane urea elastomers of relatively high molecular weight dihydroxy compounds, diisocyanates and chain lengthening agents, characterised in that the organic chain lengthening agents having a liquid-crystalline behaviour correspond to the following formula

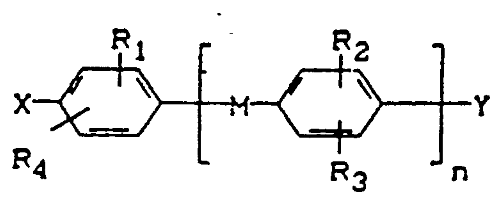

wherein

M stands for

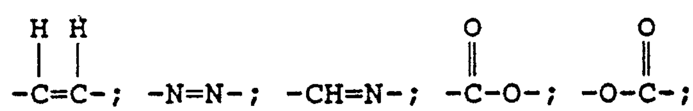

or the trans-amide group,
$R_1$ to $R_4$ stand for hydrogen, F, Cl, Br, I, CN, $CF_3$ or saturated aliphatic alkyl substituents having 1 to 12 carbon atoms optionally interrupted by ether oxygen atoms and
n = integers with a value of 1, 2 or 3 and
X and Y denote, independently of one another, an isocyanate reactive group having active hydrogen atoms.

2. Elastomers in the form of films or fibres corresponding to Claim 1.

3. Elastomers according to Claims 1 and 2, characterised in that in the organic chain-lengthening agents having a liquid-crystalline behaviour, $R_1$ to $R_4$ stand for hydrogen, Cl, Br, CN or methyl groups.

4. Elastomers according to Claims 1 to 3, characterised in that X and Y denote, independently of one another, OH, primary and seoondary amino groups, SH or CO-NH-$NH_2$ groups.

5. Elastomers according to Claims 1 to 4, characterised in that X and Y denote, independently of one another, OH and/or $NH_2$ groups which are (cyclo)aliphatically bound.

6. A process for the preparation of substantially linear polyurethane and/or polyurethaneurea elastomers based on relatively high molecular weight dihydroxy compounds, diisocyanates and chain lengthening agents, characterised in that the chain lengthening agents used which have liquid-crystalline properties corresponds to the following formula

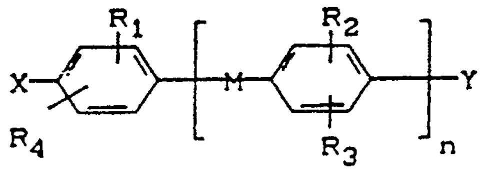

wherein

M stands for

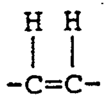 ; -N=N- ; -CH=N-, 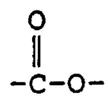 ; 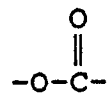 ;

or the trans-amide group,
$R_1$ to $R_4$ stand for hydrogen, F, C1, Br, I, CN, $CF_3$ or saturated aliphatic alkyl substituents having 1 to 12 carbon atoms optionally interrupted by ether oxygen atoms and
n stands for the integer 1, 2 or 3 and
X and Y denote, independently of one another, an isocyanate reactive group having active H atoms.

**7.** A process according to Claim 6, characterised in that the liquid crystalline chain lengthening agents used are compounds in which X and Y denote, independently of one another, an OH group, a primary or secondary amino group, an SH group or a CO-NH-$NH_2$ group.

**8.** A process according to Claims 6 and 7, characterised in that X and Y denote, independently of one another, OH and/or $NH_2$ groups which are (cyclo)aliphatically bound.

**9.** A process according to Claims 6, 7 and 8, characterised in that the substantially linear polyurethaneurea(s) are formed into films and elastomer fibres from the melt or from solutions.

## Revendications

**1.** Elastomères de polyuréthannes et/ou de polyuréeuréthannes essentiellement linéaires, à base de composés dihydroxylés à haut poids moléculaire, de diisocyanates et d'agents d'allongement des chaînes, caractérisés en ce que les agents d'allongement des chaînes organiques, ayant un comportement de cristaux liquides, répondent à la formule

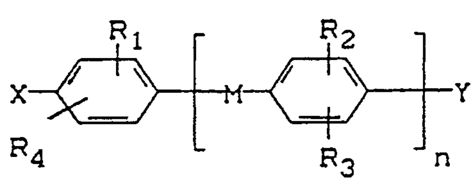

dans laquelle

M représente

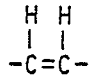 ; -N=N- ; -CH=N- ; 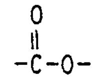 ; 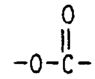 ;

ou le groupement transamide,
$R_1$ et $R_4$ représentent l'hydrogène, F, Cl, Br, I, CN, $CF_3$ ou des substituants alkyles aliphatiques saturés

éventuellement interrompus par des atomes d'oxygène d'éther et contenant de 1 à 12 atomes de carbone,
n est un nombre entier égal à 1, 2 ou 3,
X et Y représentent chacun, indépendamment l'un de l'autre, un groupe à atome d'hydrogène actif réactif avec les isocyanates.

**2.** Elastomères à l'état de feuilles ou de fibres selon la revendication 1.

**3.** Elastomères selon les revendications 1 et 2, caractérisés en ce que les symboles $R_1$ à R, de la formule des agents d'allongements des chaînes organiques à comportement de cristaux liquides représentent l'hydrogène, Cl, Br, CN ou des groupes méthyle.

**4.** Elastomères selon les revendications 1 à 3, caractérisés en ce que X et Y représentent chacun, indépendamment l'un de l'autre, OH, un groupe amino primaire ou secondaire, un groupe SH ou un groupe $-CO-NH-NH_2-$.

**5.** Elastomères selon les revendications 1 à 4, caractérisés en ce que X et Y représentent chacun, indépendamment l'un de l'autre, un groupe OH et/ou $NH_2$ à liaisons (cyclo)aliphatiques.

**6.** Procédé de préparation d'élastomères de polyuréthannes et/ou de polyuréthanneurées essentiellement linéaires à base de composés dihydroxylés à haut poids moléculaire, de diisocyanates et d'agents d'allongement des chaînes, caractérisé en ce que l'on utilise en tant qu'agents d'allongement des chaînes à propriétés de cristaux liquides des composés de formule

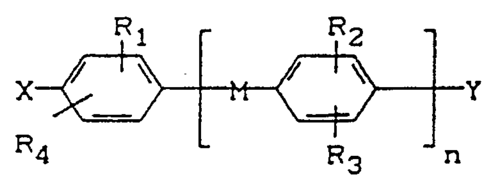

dans laquelle

M représente

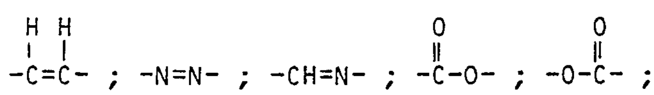

ou le groupement transamide,
$R_1$ à $R_4$ représentent l'hydrogène, F, Cl, Br, I, CN, $CF_3$ ou des substituants alkyles aliphatiques saturés éventuellement interrompus par des atomes d'oxygène d'éther et contenant de 1 à 12 atomes de carbone, et
n est un nombre entier égal à 1, 2 ou 3,
X et Y représentent chacun, indépendamment l'un de l'autre, un groupe à atome d'hydrogène actif, réactif avec les isocyanates.

**7.** Procédé selon la revendication 6, caractérisé en ce que l'on utilise des agents d'allongement des chaînes à cristaux liquides pour lesquels X et Y représentent chacun, indépendamment l'un de l'autre, un groupe OH, un groupe amino primaire ou secondaire, un groupe SH ou $-CO-NH-NH_2-$.

**8.** Procédé selon les revendications 6 et 7, caractérisé en ce que X et Y représentent chacun, indépendamment l'un de l'autre, un groupe OH et/ou $NH_2$ à liaisons (cyclo)aliphatiques.

**9.** Procédé selon les revendications 6, 7 et 8, caractérisé en ce que les polyuréthanne(urée)s essentiellement linéaires sont façonnées à l'état fondu ou à l'état de solutions en feuilles et fibres élastoméres.